# EUROPEAN PATENT SPECIFICATION

(11) **EP 0 664 952 B1**
(45) Date of publication and mention of the grant of the patent: **29.09.1999**
(21) Application number: 94921792.1
(22) Date of filing: 20.07.1994
(51) Int. Cl.: A01M 1/20

(54) **BOX HAVING THEREIN POISON BAIT AGENT**
GIFTKÖDERHALTER
BOITE CONTENANT UN APPAT EMPOISONNE

(30) Priority: 21.07.1993 JP 3979493 U
(43) Date of publication of application: 02.08.1995
(73) Proprietor: SUMITOMO CHEMICAL COMPANY LIMITED, Osaka-shi, Osaka 541-0041 (JP)
(72) Inventor: MINAGAWA, Fumiyasu, Toyonaka-shi, Osaka 560 (JP); SENBO, Satoshi, Takarazuka-shi, Hyogo 665 (JP)
(74) Representative: Eder, Thomas, Dr.-Ing.
(86) International application number: JP9401195
(87) International publication number: WO9502959

(56) References cited:
- WO-A-92/22200
- AU-B- 582 904
- GB-A- 2 095 965
- GB-A- 2 128 463
- JP-U- 3 024 874
- JP-U- 62 013 175
- JP-U- 63 068 780
- JP-U- 63 068 781

## Description

### TECHNICAL FIELD

This invention relates to a bait station used to kill or control cockroaches.

### BACKGROUND ART

Cockroaches prefer dark, narrow spaces where air little flows and have a habit of creeping into narrow openings.

The present inventors have endeavored to develop a method for killing or controlling cockroaches effectively. Consequently, they have arrived at a novel bait station having openings through which cockroaches are tempted to enter and space which cockroaches can enter and can eat the bait in a peaceful atmosphere and can turn and get out of the bait station, making use of such habit of cockroaches.

Such a bait station is known from e.g. JP-U-63-68780.

### DISCLOSURE OF THE INVENTION

This invention relates to a flat bait station comprising top and bottom plates and a side wall connecting the top and bottom plates together, the side wall having at least one small opening having such a size that cockroaches cannot pass through without touching part of their bodies with edges of the opening, the bait station having such an internal height that the ends of antennas of cockroaches can touch the top plate, and a toxic bait accommodated in contact with or in close proximity to the inside of the side wall at a portion remote from the small openings to provide a space so that cockroaches can freely move.

The size of the small openings is such that cockroaches cannot pass through without touching part of their bodies with edges of the opening, or more specifically such that cockroaches can barely pass through with part of their bodies such as their backs, bellies and sides kept in touch with edge of the small opening. The size of the opening can vary because the sizes of cockroaches are different according to the kinds and degree of maturity of target cockroaches.

In view of the cross-sectional shape of cockroaches, such a small opening is preferably longer horizontally than vertically and may be in the shape of a rectangle or an ellipsoid.

In order to allure as many cockroaches into the bait station as possible, preferably a plurality of such small openings should be provided. If a plurality of small openings are provided, they may have the same size. But since the size of cockroaches to be controlled generally vary according to their kinds (e.g. Blattela germanica and Periplaneta fuliginosa) and the degree of maturity, it is preferable that these openings having different sizes are provided according to the size of cockroaches so that cockroaches of any size can enter the bait station easily.

A toxic bait is placed in contact with or in close proximity to the side wall in the bait station at a point remote from the small opening or openings, preferably at a corner of the side wall or in a narrow area of the space defined by the side wall. In other words, the toxic bait is placed in a blind area, so that its environment is narrow and dark, where air little flows, which cockroaches prefer, and they can eat the bait with a peaceful mind. Also, since the space in a bait station is continuous, not partitioned, cockroaches can move about in the bait station. Namely, the space they can easily enter, turn and leave after eating the bait is obtained efficiently.

The range of internal height of the bait station is such that the ends of the antennas of cockroaches can touch with the ceiling of the bait station.

In order to keep the toxic bait in a fixed position in the bait station, it is preferably set in a case mounted on the bottom plate and/or supported by support rods protruding from the top and/or bottom plates.

The toxic bait used in the present invention may be an ordinary one used to kill or control cockroaches, such as one containing fenitrothion and hydramethylnon as an active ingredient. Also, such an active ingredient may be formulated into a microcapsule.

### BRIEF DESCRIPTION OF THE DRAWINGS

- Fig. 1:: (a) a perspective view of a first embodiment;
(b) a plan view showing the same with the top plate removed;
(c) a vertical sectional view of the same;
- Fig. 2:: (a) a perspective view of a second embodiment;
(b) a plan view showing the same with the top plate removed; and
- Fig. 3:: (a) a perspective view of a third embodiment;
(b) a plan view showing the same with the top plate removed.

### BEST MODE FOR CARRYING OUT THE INVENTION

Now description is made of the embodiments of this invention with reference to the drawings.

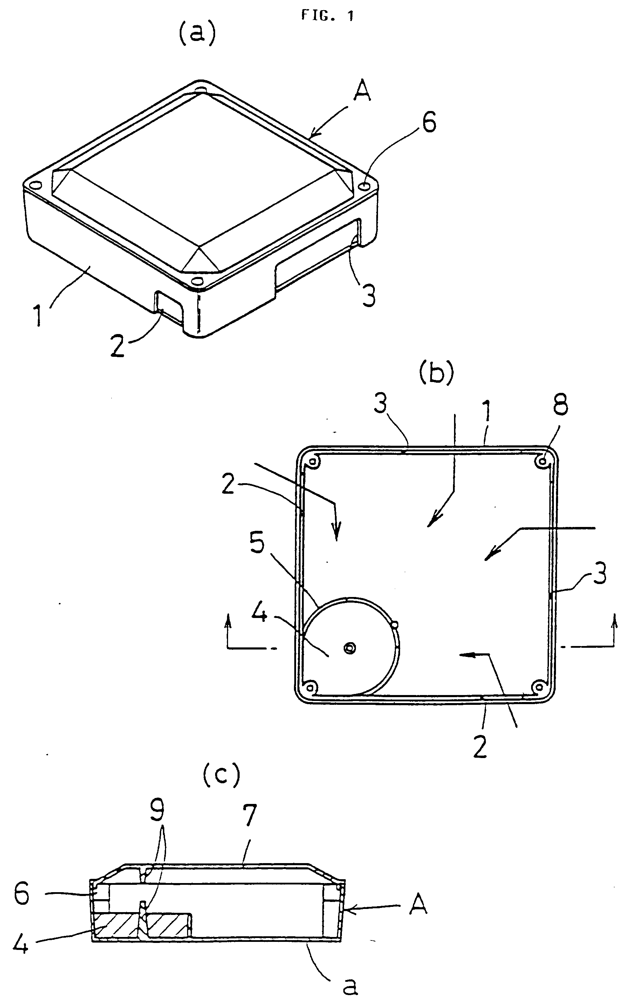

Figs. 1(a) to 1(c) show the bait station A of the first embodiment.

This bait station A is a container made of a synthetic resin and comprises a bottom plate having a square shape approximately 45 x 45 mm, a top plate also having a square shape approximately 45 x 45 mm and having a convex section, and four side walls 1 having a height of about 10 mm, so that the internal height of the bait station will be about 13 mm. Two of the four side walls have small rectangular openings 2 which are 7 mm across and 4 mm high. The other two of the side walls have larger rectangular openings 3 which are 21 mm across and 7 mm high. In the bait station, a case 5 is mounted on the bottom plate in contact with two of the side walls. A cylindrical toxic bait 4 having a diameter of about 15 mm and a height of about 6 mm is mounted in the case 5. In the center of the bottom plate surrounded by the case 5, a support rod 9 is provided, and another support rod 9 is provided opposite to the former support rod. A toxic bait is secured in position in the case 5 by the support rods 9. The respective side walls intersect with each other and with the bottom plate at a right angle, forming an integral recessed base a in a body. The top plate 7 is provided at its four corner with pins 6. The integral recessed base a is provided at its four corners with holes 8 to receive the pins 6.

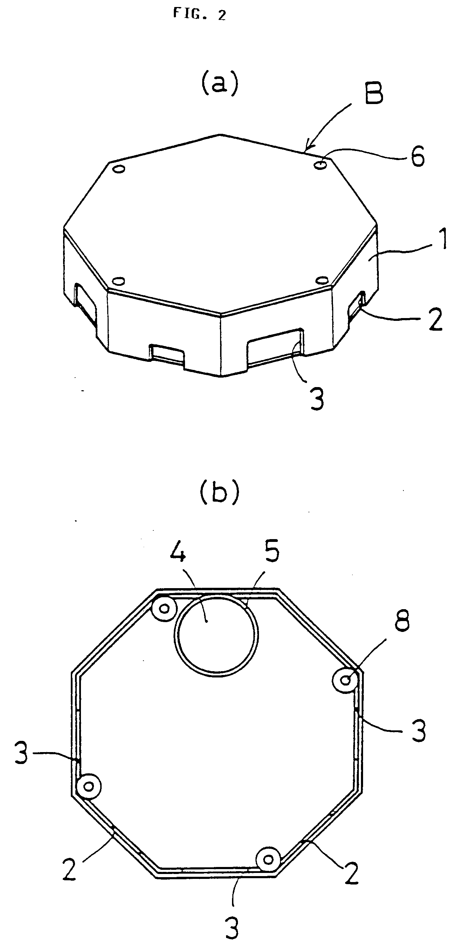

Figs. 2(a) and 2(b) show the bait station B of the second embodiment.

This bait station B is a container made of a synthetic resin and comprises top and bottom plates both having the shape of a regular octagon, and eight side walls 1. Five of the eight side walls adjacent to one another have alternately small rectangular openings 2 and large rectangular openings 3 which are slightly larger than the openings 2. Cockroaches can creep into the bait station through these openings. A case 5 is mounted on the inner side of the bottom plate while kept in contact with the central one of the three side walls not having any openings and a toxic bait is mounted therein. The bottom plate and the eight side walls form an integral recessed base in a body. The top plate is provided on alternate four corners of eight corners with pins 6. The integral recessed base a is provided on alternate four of eight corners with holes 8 to receive the pins 6.

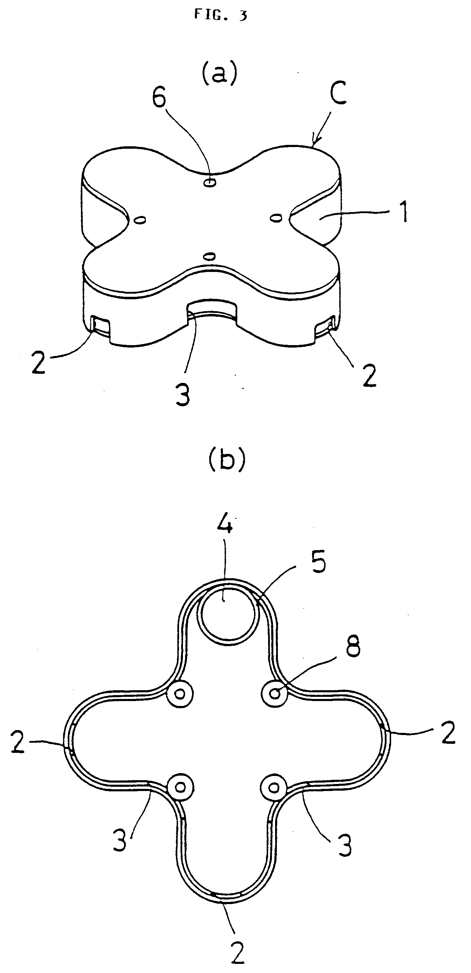

Figs. 3(a) and 3(b) show the bait station C in the third embodiment.

This bait station C is a container made of a synthetic resin and comprises cross-shaped top and bottom plates, and a curved side wall 1. Small rectangular openings 2 are formed in three of the four convex portions of the side wall 1 and rectangular openings 3 larger than the openings 2 are formed in the two concave portions between the above-mentioned three convex portions. The bottom plate and the side wall form an integral recessed base in a body. Pins 6 are provided at four points of the top plate for binding. The integral recessed base is provided with holes 8 to receive the pins 6.

### INDUSTRIAL APPLICATION

The bait station according to the present invention is designed such that the cockroaches are tempted to creep thereinto and eat the bait therein with high efficiency. It can therefore get rid of cockroaches effectively using the bait station according to the present invention.

## Claims

1. A flat bait station for cockroaches, comprising top and bottom plates and side walls (1) connecting said top and bottom plates together, said side walls (1) having at least one small opening (2) and at least one larger opening (3), with a case (5) for toxic bait (4) which is mounted at the inside of one side wall (1), wherein the toxic bait (4) is placed in contact with or in close proximity to the side wall (1) in the bait station at a blind area remote from the at least one small opening (2) to provide a space, so that cockroaches can freely move horizontally, wherein the small opening (2) has such a size that the targeted cockroach, whic has a specific size depending on the kind of cockroach and degree of maturity, cannot pass through without touching part of the body with edges of the opening (2), and wherein the bait station has such an internal height that the ends of antennas of cockroaches can touch the top plate (7).

2. Bait station as claimed in claim 1, **characterized in that** the bait case (5) is mounted on the bottom plate in contact with two of the side walls and that the opening (2) is in the side wall close to the bait case (5), but at least an opening (3) larger than the opening (2) is in the side wall remote from the bait case (5).

3. Bait station as claimed in any of claims 1 or 2, **characterized in that** said side wall (1) has a plurality of openings (2).

4. Bait station as claimed in claim 1, **characterized in that** the bait case (5) is on one side and there are no openings in the sides adjacent the side on which the bait case (5) is mounted.

5. Bait station as claimed in claim 1, **characterized in that** openings (2) are formed in three of four convex portions and other larger openings (3) are formed in two concave portions between the above-mentioned three convex portions and that the bait case (5) is mounted in the bottom of the remaining one of the convex portions.

6. Bait station as claimed in any of claims 1 - 5, **characterized in that** the rectangular openings (2) are 7 mm across and 4 mm high and the larger rectangular opening is 21 mm across and 7 mm high.

7. Bait station as claimed in any of claims 1 - 6, **characterized** in that the openings (2) have different sizes.

8. Bait station as claimed in any of claims 1 - 8, **characterized** in that the internal height of the bait station is about 13 mm.

## Patentansprüche

1. Flache Köderstelle für Küchenschaben, bestehend aus einer oberen und einer unteren Platte sowie Seitenwänden (1), die die obere und die untere Platte miteinander verbinden, wobei die Seitenwände (1) mindestens eine kleine Öffnung (2) und mindestens eine größere Öffnung (3) haben, mit einem Behältnis (5) für einen giftigen Köder (4), das auf der Innenseite einer Seitenwand (1) befestigt ist, wobei der giftige Köder (4) in der Köderstelle in einem verborgenen Bereich, der von der mindestens einen kleinen Öffnung (2) entfernt ist, so dass ein Raum frei bleibt, damit die Küchenschaben sich horizontal frei bewegen können, so angeordnet ist, dass er mit der Seitenwand (1) in Kontakt ist oder sich sehr nahe an dieser Wand befindet, wobei die kleine Öffnung (2) so abgemessen ist, dass die zu fangende Küchenschabe, die abhängig von der Art der Küchenschabe und dem Grad ihres bisherigen Wachstums eine bestimmte Größe hat, nicht durch sie hindurch gelangen kann, ohne dass ein Teil ihres Körpers mit Kanten der Öffnung (2) in Kontakt kommt, und wobei die Köderstelle innen so hoch ist, dass die Enden der Fühler der Küchenschaben die obere Platte (7) berühren können.

2. Köderstelle nach Anspruch 1, **dadurch gekennzeichnet, dass** das Köderbehältnis (5) auf der unteren Platte angeordnet ist, wobei es mit zwei der Seitenwände in Kontakt ist, und dass die Öffnung (2) sich in der Seitenwand befindet, die in der Nähe des Köderbehältnisses (5) ist, dass jedoch mindestens eine Öffnung (3), die größer ist als die Öffnung (2), sich in der Seitenwand befindet, die von dem Köderbehältnis (5) entfernt ist.

3. Köderstelle nach einem der Ansprüche 1 oder 2, **dadurch gekennzeichnet, dass** die Seitenwand (1) eine Vielzahl von Öffnungen (2) aufweist.

4. Köderstelle nach Anspruch 1, **dadurch gekennzeichnet, dass** das Köderbehältnis (5) sich auf einer Seite befindet und dass sich in den Seiten nahe der Seite, auf der das Köderbehältnis (5) befestigt ist, keine Öffnungen befinden.

5. Köderstelle nach Anspruch 1, **dadurch gekennzeichnet, dass** Öffnungen (2) in drei von vier konvexen Bereichen ausgebildet sind und dass andere, größere Öffnungen (3) in zwei konkaven Bereichen zwischen den vorgenannten drei konvexen Bereichen ausgebildet sind, und dass das Köderbehältnis (5) an der Unterseite des verbleibenden konvexen Bereichs befestigt ist.

6. Köderstelle nach einem der Ansprüche 1 bis 5, **dadurch gekennzeichnet, dass** die rechteckigen Öffnungen (2) 7mm breit und 4mm hoch sind und dass die größere rechteckige Öffnung 21 mm breit und 7mm hoch ist.

7. Köderstelle nach einem der Ansprüche 1 bis 6, **dadurch gekennzeichnet, dass** die Öffnungen (2) unterschiedliche Größen haben.

8. Köderstelle nach einem der Ansprüche 1 bis 8, **dadurch gekennzeichnet, dass** die Köderstelle innen etwa 13mm hoch ist.

## Revendications

1. Poste plat à appâts pour blattes, comprenant des plaques supérieure et inférieure et des parois latérales (1) raccordant les plaques supérieure et inférieure, les parois latérales (1) ayant au moins une petite ouverture (2) et au moins une ouverture plus grande (3), avec un carter (5) à appât toxique (4) monté à l'intérieur de la première paroi latérale (1), dans lequel l'appât toxique (4) est placé au contact de la paroi latérale (1) ou très près de cette paroi dans le poste à appâts dans une zone aveugle distante de la petite ouverture au moins (2) pour la formation d'un espace tel que les blattes peuvent librement se déplacer horizontalement, dans lequel la petite ouverture (2) a une dimension telle que la blatte visée, qui a une dimension spécifique qui dépend de la nature de la blatte et de son degré de maturité, ne peut pas passer sans toucher les bords de l'ouverture (2) par une partie de son corps, et le poste à appâts a une hauteur telle que les extrémités des antennes des blattes peuvent toucher la plaque supérieure (7).

2. Poste à appâts selon la revendication 1, caractérisé en ce que le carter (5) à appât est monté sur la plaque inférieure au contact de deux des parois latérales, et l'ouverture (2) est formée dans la paroi latérale proche du carter à appât (5), mais au moins une ouverture (3) plus grande que ladite ouverture (2) est formée dans la paroi latérale distante du carter (5) à appât.

3. Poste à appâts selon la revendication 1 ou 2, caractérisé en ce que la paroi latérale (1) a plusieurs ouvertures (2).

4. Poste à appâts selon la revendication 1, caractérisé en ce que le carter (5) à appât est placé d'un premier côté, et aucune ouverture n'est formée du côte adjacent au côté sur lequel est monté le carter à appât (5).

5. Poste à appâts selon la revendication 1, caractérisé en ce que des ouvertures (2) sont formées dans trois de quatre parties convexes, et d'autres ouvertures plus grandes (3) sont formées dans deux parties concaves placées entre les trois parties convexes précitées, et le carter à appât (5) est monté à la partie inférieure de celle des parties convexes qui reste.

6. Poste à appâts selon l'une quelconque des revendications 1 à 5, caractérisé en ce que les ouvertures rectangulaires (2) ont une largeur de 7 mm et une hauteur de 4 mm, et l'ouverture rectangulaire plus grande a une largeur de 21 mm et une hauteur de 7 mm.

7. Poste à appâts selon l'une quelconque des revendications 1 à 6, caractérisé en ce que les ouvertures (2) ont des dimensions différentes.

8. Poste à appâts selon l'une quelconque des revendications 1 à 8, caractérisé en ce que la hauteur interne du poste à appâts est d'environ 13 mm.
